(19) Europäisches Patentamt
European Patent Office
Office européen des brevets

(11) **EP 4 692 272 A1**

(12) **EUROPEAN PATENT APPLICATION**
published in accordance with Art. 153(4) EPC

(43) Date of publication:
**11.02.2026 Bulletin 2026/07**

(21) Application number: **24779270.8**

(22) Date of filing: **07.03.2024**

(51) International Patent Classification (IPC):
**C09K 3/10** (2006.01)        **B01D 63/00** (2006.01)
**B01D 63/10** (2006.01)

(52) Cooperative Patent Classification (CPC):
**B01D 63/00; B01D 63/10; C09K 3/10**

(86) International application number:
**PCT/JP2024/008892**

(87) International publication number:
**WO 2024/203136 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.03.2023   JP 2023048939**

(71) Applicant: **Nitto Denko Corporation**
**Osaka 567-8680 (JP)**

(72) Inventors:
• **GOTO Satomi**
  **Ibaraki-shi, Osaka 567-8680 (JP)**
• **NAKANO Takeshi**
  **Ibaraki-shi, Osaka 567-8680 (JP)**
• **MIWA Kazuya**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **SEALING MATERIAL FOR MEMBRANE SEPARATION DEVICES, AND MEMBRANE SEPARATION DEVICE**

(57)    The present invention aims to provide a sealing material suitable for reducing a decrease in adhesion due to contact with an aqueous solution containing a volatile organic compound. The sealing material of the present invention is a sealing material configured to be included in a membrane separation device, wherein a storage modulus E' at 60°C is $10^7$ Pa or more and $10^9$ Pa or less, the storage modulus E' being measured by a dynamic viscoelasticity measurement test for a sheet-shaped sample piece obtained by curing the sealing material while the sheet-shaped sample piece is immersed in a 20 weight% aqueous ethanol solution.

FIG. 1

**Description**

TECHNICAL FIELD

The present invention relates to a sealing member for membrane separation devices and a membrane separation device.

BACKGROUND ART

A membrane separation method was developed as a method for separating, from an aqueous solution containing a volatile organic compound, the organic compound and water. A membrane separation device, such as a spiral membrane element or a hollow fiber membrane module, is used for the membrane separation method. A spiral membrane element includes a central tube and a plurality of separation membranes wound around the central tube. The separation membranes are each sealed on three sides thereof with an adhesive to form a sack-like structure, and are wound around the central tube (e.g., Patent Literature 1). A hollow fiber module includes a tubular case and a plurality of hollow fiber membranes contained in the tubular case. The hollow fiber membranes are bonded by a bonding portion including an adhesive (e.g., Patent Literature 2).

CITATION LIST

Patent Literature

Patent Literature 1: JP 2009-018239 A
Patent Literature 2: JP 2018-118249 A

SUMMARY OF INVENTION

Technical Problem

In the case where, for example, a sealing material having low resistance to volatile organic compounds is used as a sealing material to be included in a membrane separation device, when a cured product of the sealing material comes into contact with an aqueous solution containing a volatile organic compound, leaching of a resin component or cracking due to swelling can decrease the adhesion between the cured product of the sealing material and a constituent of the membrane separation device. As a result, the cured product of the sealing material can peel off the adhesion interface, causing a leak.

The present invention aims to provide: a sealing material suitable for reducing a decrease in adhesion due to contact with an aqueous solution containing a volatile organic compound; and a membrane separation device including this sealing material.

Solution to Problem

Through intensive studies conducted to solve the above issue, the storage modulus of a rubber-like flat region of a cured product of a sealing material in a swelled state attracted the present inventors' attention. The storage modulus of a rubber-like flat region of a cured product of a sealing material relates to an adhesion retention force at the adhesion interface of the cured product of the sealing material. The present inventors conducted further studies on the basis of this finding to complete the present invention.

The present invention provides a sealing material for membrane separation devices, the sealing material being configured to be included in a membrane separation device, wherein
a storage modulus E' at 60°C is $10^7$ Pa or more and $10^9$ Pa or less, the storage modulus E' being measured by a dynamic viscoelasticity measurement test for a sheet-shaped sample piece obtained by curing the sealing material while the sheet-shaped sample piece is immersed in a 20 weight% aqueous ethanol solution.

In another aspect, the present invention provides a membrane separation device including:

a central tube; and
a plurality of separation membranes that separate an aqueous solution containing a volatile organic compound into a permeated fluid and a non-permeated fluid, wherein

the separation membranes are layered, are each sealed on an outer peripheral portion of the separation membrane by a cured product of a sealing material to form a sack-like structure, and are wound around the central tube, and the sealing material includes the sealing material according to the above invention.

Advantageous Effects of Invention

The present invention can provide a sealing material suitable for reducing a decrease in adhesion due to contact with an aqueous solution containing a volatile organic compound and a membrane separation device including this sealing material.

BRIEF DESCRIPTION OF DRAWINGS

FIG. 1 is a developed perspective view schematically showing a spiral membrane element.
FIG. 2 is a schematic cross-sectional view showing a separation membrane included in a spiral membrane element.
FIG. 3A shows a step of manufacturing a spiral membrane element.
FIG. 3B shows a subsequent manufacturing step following the step shown in FIG. 3A.
FIG. 4 is a schematic side view illustrating liquid tensile mode of a DMA device.

DESCRIPTION OF EMBODIMENTS

A sealing material for membrane separation devices according to a first aspect of the present invention is a sealing material configured to be included in a membrane separation device, wherein a storage modulus E' at 60°C is $10^7$ Pa or more and $10^9$ Pa or less, the storage modulus E' being measured by a dynamic viscoelasticity measurement test for a sheet-shaped sample piece obtained by curing the sealing material while the sheet-shaped sample piece is immersed in a 20 weight% aqueous ethanol solution.

According to a second aspect of the present invention, for example, in the sealing member according to the first aspect, a temperature T at a peak position of loss tangent is 0°C or higher and 60°C or lower, the loss tangent being measured by a dynamic viscoelasticity measurement test for a sheet-shaped sample piece obtained by curing the sealing material while the sheet-shaped sample piece is immersed in a 20 weight% aqueous ethanol solution.

According to a third aspect of the present invention, for example, in the sealing member according to the second aspect, the temperature T is 4°C or higher and 40°C or lower.

According to a fourth aspect the present invention, for example, in the sealing member according to any one of the first to third aspects, the storage modulus E' is $10^7$ Pa or more and $10^8$ Pa or less.

According to a fifth aspect the present invention, for example, the sealing member according to any one of the first to fourth aspects includes an epoxy compound.

According to a sixth aspect the present invention, for example, in the sealing member of a fifth aspect, the epoxy compound includes a bifunctional epoxy compound.

A membrane separation device according to a seventh aspect of the present invention includes:

a central tube; and
a plurality of separation membranes that separate an aqueous solution containing a volatile organic compound into a permeated fluid and a non-permeated fluid, wherein
the plurality of separation membranes are layered, are each sealed on an outer peripheral portion of the separation membrane by a cured product of a sealing material to form a sack-like structure, and are wound around the central tube, and
the sealing material includes the sealing material according to any one of the first to sixth aspects.

Embodiments of the present disclosure will be described hereinafter with reference to the drawings. The present invention is not limited to the following embodiments.

<Sealing member for membrane separation devices>

A sealing material according to one embodiment of the present invention is configured to be included in a membrane separation device. The membrane separation device is, for example, a spiral membrane element. Hereinafter, a structure of a spiral membrane element and a spiral membrane element manufacturing method will be described first, and then the sealing material according to the present embodiment.

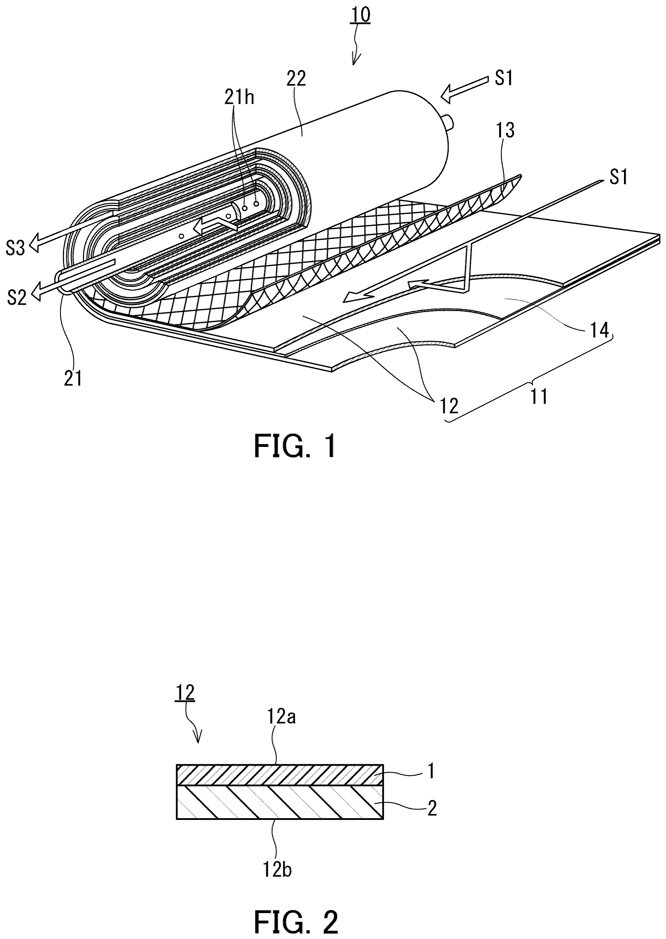

FIG. 1 is a developed perspective view schematically showing an example of a spiral membrane element. A spiral membrane element 10 (hereinafter referred to as "separation membrane element 10") shown in FIG. 1 includes a central tube 21 and a layered body 22. The layered body 22 is wound around the central tube 21 and disposed around the central tube 21. Inside the layered body 22, there are a feed fluid flow passage and a permeated fluid flow passage.

A feed fluid S1 is supplied from one end face of the layered body 22 to an inside of the separation membrane element 10 and flows, in parallel with a longitudinal direction of the central tube 21, through the feed fluid flow passage. In the separation membrane element 10, the feed fluid is separated into a permeated fluid S2 and a non-permeated fluid S3. The permeated fluid S2 is guided to an outside via the central tube 21. The non-permeated fluid S3 is discharged to the outside of the separation membrane element 10 from the other end face of the layered body 22.

The layered body 22 is composed of a separation membrane 12, a feed spacer 13, and a permeation spacer 14. End faces of the separation membrane 12 form the end faces of the layered body 22. The layered body 22 is specifically composed of a plurality of the separation membranes 12, a plurality of the feed spacers 13, and a plurality of the permeation spacers 14.

The separation membranes 12 are layered, are each sealed on three sides of an outer peripheral portion of the separation membrane 12 by a cured product of a sealing material (a later-described sealing material 31) to form a sack-like structure, and are wound around the central tube 21. The feed spacer 13 is disposed between the separation membranes 12 such that the feed spacer 13 is positioned outside the sack-like structure. The feed spacer 13 secures space as a feed fluid flow passage between the separation membranes 12. The permeation spacer 14 is disposed between the separation membranes 12 such that the permeation spacer 14 is positioned inside the sack-like structure. The permeation spacer 14 secures space as a permeated fluid flow passage between the separation membranes 12. A pair of the separation membranes 12 and the permeation spacer 14 form a membrane leaf 11. An opening end of the membrane leaf 11 is connected to the central tube 21 such that the permeated fluid flow passage communicates with the central tube 21.

The central tube 21 is typically in the shape of a tube, particularly a circular tube. The central tube 21 serves the role of collecting the permeated fluid S2 having permeated through each of the separation membranes 12 and guiding it to the outside of the separation membrane element 10. The central tube 21 is provided with openings 21h allowing communication between an inner space of the central tube 21 and an outer space of the central tube 21. The permeated fluid S2 flows into the central tube 21 through these openings 21h. The central tube 21 is adhered to the layered body 22 with a cured product of a sealing material (a later-described sealing material 32).

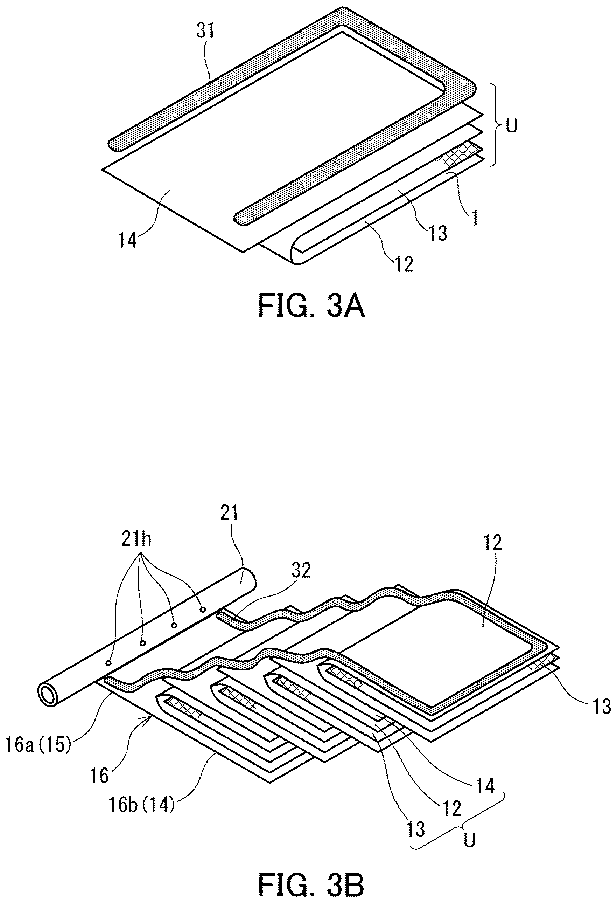

Next, an example of the method for manufacturing the separation membrane element 10 will be described hereinafter with reference to FIGS. 3A and 3B. First, as shown in FIG. 3A, the separation membrane 12 is folded into two such that a separation functional layer of the separation membrane 12 is on the inner side. The feed spacer 13 is disposed in between, and the permeation spacer 14 is disposed on the separation membrane 12. Then, the sealing material 31 is applied to three sides of an outer peripheral portion of the permeation spacer 14. A separation membrane unit U is obtained in this manner. The sealing material 31 is still uncured at this point of the process.

Next, the central tube 21, a spacer 16, and a plurality of the separation membrane units U are prepared as shown in FIG. 3B. The spacer 16 includes, for example, a first portion 16a directly wound around the central tube 21 and a second portion 16b stacked with the separation membrane units U. The first portion 16a of the spacer 16 corresponds to a flow passage spacer 15, and the second portion 16b corresponds to the permeation spacer 14. The material, the thickness, etc. of the first portion 16a may be the same as those of the second portion 16b or may be different from those of the second portion 16b. The separation membrane units U are disposed in a staircase arrangement on the second portion 16b of the spacer 16. The number of separation membrane units U is, for example, but not particularly limited to, 2 or more and 30 or less. The topmost separation membrane unit U does not need to include the permeation spacer 14, for example.

Next, the sealing material 32 is applied to three sides of an outer peripheral portion of the set of the separation membrane units U disposed in a staircase arrangement. The sealing material 32 is applied so as not to cover the openings 21h of the central tube 21. Following the application of the sealing material 32, the first portion 16a of the spacer 16 is wound around the central tube 21. The sealing material 32 is still uncured at this point of the process. The number of times the first portion 16a is wound is, for example, but not particularly limited to, 1 to 15, and is preferably 2 to 10.

Next, the plurality of separation membrane units U disposed in a staircase arrangement are wound around the central tube 21. The topmost separation membrane unit U is thereby stacked with the second portion 16b of the spacer 16. After winding the separation membrane units U around the central tube 21, the sealing material 32 is cured to form the sack-like membrane leaf 11. An assembly including the central tube 21 and the layered body 22 is obtained thereby.

In the present embodiment, the feed fluid S1 to be processed by the separation membrane element 10 is an aqueous solution containing a volatile organic compound. In the case where, for example, a sealing material having low resistance to a volatile organic compound is used as the sealing materials 31 and 32 included in the separation membrane element 10, when the cured products of the sealing materials 31 and 32 come into contact with the aqueous solution containing the volatile organic compound, leaching of a resin component or cracking due to swelling can decrease the adhesion between the cured products of the sealing materials 31 and 32 and the constituents of the separation membrane element 10. If the adhesion between the cured products of the sealing materials 31 and 32 and the constituents decreases during the operation of the separation membrane element 10, the cured products of the sealing materials 31 and 32 can peel off the adhesion interface, causing a leak.

To solve the above issue, it is conceivable, for example, that a sealing material is designed to have higher post-curing hardness to avoid swelling due to contact with the aqueous solution containing the organic compound. However, it is impossible to perfectly avoid swelling of a cured product of the sealing material by increasing the post-curing hardness of the sealing material. Then, the storage modulus of a rubber-like flat region of a cured product of a sealing material in a swelled state attracted the present inventors' attention. The storage modulus of a rubber-like flat region of a cured product of a sealing material relates to an adhesion retention force at the adhesion interface of the cured product of the sealing material.

A storage modulus E' at 60°C is $10^7$ Pa or more and $10^9$ Pa or less, the storage modulus E' being measured by a dynamic viscoelasticity measurement test for a sheet-shaped sample piece obtained by curing the sealing material according to the present embodiment (hereinafter simply referred to as "sealing material") while the sheet-shaped sample piece is immersed in a 20 weight% aqueous ethanol solution. The temperature of 60°C is, for example, a temperature of a rubber-like flat region of the cured product of the sealing material. For the cured product of the sealing material having the above property, the adhesion retention force at the adhesion interface is maintained. Therefore, a decrease in adhesion can be reduced and occurrence of a leak can be avoided by using the sealing material in a membrane separation device, for example, as the sealing materials 31 and 32 of the separation membrane element 10.

In the case where the sealing material includes a later-described filler, the storage modulus E' is preferably $10^7$ Pa or more and $10^9$ Pa or less even without the filler.

The storage modulus E' may be $10^7$ Pa or more and $10^8$ Pa or less. In this case, the sealing material can further reduce a decrease in adhesion.

A temperature T at a peak position of loss tangent is preferably 0°C or higher and 60°C or lower, the loss tangent being measured by a dynamic viscoelasticity measurement test for a sheet-shaped sample piece obtained by curing the sealing material while the sheet-shaped sample piece is immersed in a 20 weight% aqueous ethanol solution. The temperature at the peak position of the loss tangent of the cured product of the sealing material relates to a force of the cured product of the sealing material, the force working to reduce dimensional change. Hence, for the cured product of the sealing material having a temperature T of 0°C or higher and 60°C or lower and a storage modulus E' of $10^7$ Pa or more and $10^9$ Pa or less at 60°C, swelling-induced dimensional change is reduced and the adhesion retention force at the adhesion interface is maintained. A decrease in adhesion is further reduced by using this sealing material.

In the case where the sealing material includes the later-described filler, it is more preferable that the temperature T determined by the dynamic viscoelasticity measurement test be 0°C or higher and 60°C or lower and the storage modulus E' determined by the dynamic viscoelasticity measurement test be $10^7$ Pa or more and $10^9$ Pa or less even without the filler.

The lower limit of the temperature T may be 5°C, 6°C, 8°C, or even 10°C.

The upper limit of the temperature T may be 55°C, 45°C, 40°C, or even 39°C.

The temperature T may be in the range of 4°C or higher and 40°C or lower. In this case, the sealing material can further reduce a decrease in adhesion.

The temperature T may be 35°C or higher, or even 40°C or higher. In this case, the sealing material can have enhanced solvent resistance.

(Dynamic viscoelasticity measurement test)

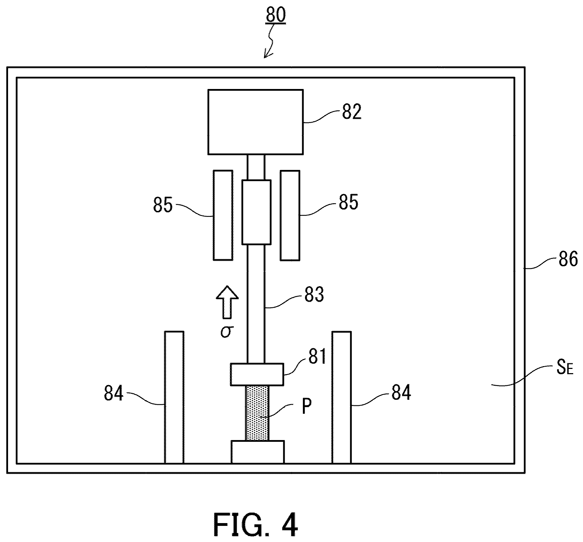

The temperature T and the storage modulus E' can be measured by the following dynamic viscoelasticity measurement test in liquid tensile mode. Dynamic mechanical analysis (DMA) is one of the methods for determining a viscoelastic behavior of a sample piece. FIG. 4 is a schematic side view illustrating liquid tensile mode of a DMA device. In the present embodiment, a DMA device that allows a sample piece to be immersed in a solution is used as the DMA device.

First, a sheet-shaped sample piece P obtained by curing the sealing material is produced. Specifically, the sample piece P can be produced by the following method. The sealing material is applied to a substrate to form a sheet having a thickness of 100 to 150 $\mu$m, and is then cured by heating. The heating condition is not limited to a particular condition as long as a curing reaction is substantially perfectly completed under the condition; the heating condition is, for example, at 80°C for two hours. The heating condition is not limited to this, and normal-temperature curing at room temperature or thermal curing at over 100°C can be selected depending on the embodiment. The cured sheet is peeled from the substrate, and is cut into a strip having a width of 5 mm and a length of 50 mm. A sample piece P is obtained in this manner. For example, a release liner (e.g., DIAFOIL manufactured by Mitsubishi Chemical Corporation) in which a silicone layer is placed on a biaxially stretched polyester film can be used as the substrate.

After immersed in advance in a 20 weight% aqueous ethanol solution $S_E$ at 60°C for three days so as to swell sufficiently, the sample piece P is cooled to room temperature before evaluation. Then, the sample piece P cooled to room temperature is clamped to a measurement head 81 of a DMA device 80 as shown in FIG. 4 such that the longitudinal direction of the sample piece P is along the vertical direction. Subsequently, a bath 86 is charged with another 20 weight% aqueous ethanol solution $S_E$, in which the clamped sample piece P is immersed. After it is confirmed that the temperature of the sample piece P is adjusted at 0°C by a temperature controller 84, measurement of a dynamic viscoelasticity of the sample piece P is started. The measurement is performed by a tensile vibration-non-resonance method specified in Japanese Industrial Standards (JIS) K 7244-4: 1999 under conditions of a gap width of 10 mm, an initial load of 10 g, and a vibration frequency of 1 Hz. After the start of the measurement, the sample piece P is heated from 0°C to 60°C at a temperature rise rate of 1°C/minute. Specifically, a stress (a frequency-dependent sinusoidal stress) $\sigma$ in a tensile direction is applied to the clamped sample piece P by a load generator 82 via a probe 83. In this step, the stress $\sigma$ is applied so that a strain amplitude of the sample piece P will be constant. In response to the stress $\sigma$, the sample piece P gives a similar sinusoidal strain response with a viscosity-component-dependent phase delay. A displacement detector 85 detects an amplitude ratio $\sigma/\varepsilon$ between the stress $\sigma$ and a strain $\varepsilon$ and a phase difference $\delta$. The storage modulus E' and a loss elastic modulus E" can be calculated using the amplitude ratio $\sigma/\varepsilon$ and the phase difference $\delta$. A measured value of the storage modulus E' measured when the sample piece P has a temperature of 60°C is considered the storage modulus E' of the sample piece P at 60°C. A loss tangent ($\tan\delta$) can be calculated by the following equation (1) on the basis of the storage modulus E' and the loss elastic modulus E" of the sample piece P. A temperature at a peak position of the loss tangent is considered the temperature T at a peak position of loss tangent of the sample piece P.

$$\tan\delta = E''/E' \qquad (1)$$

The sealing material may include an epoxy compound. The temperature T and the storage modulus E' of the sealing material including the epoxy compound are easily controlled in the above ranges. A weight-average molecular weight of the epoxy compound is, for example, 1000 or more. The sealing material may include an uncured product of a thermosetting resin other than the epoxy compound. Examples of the uncured product of such a thermosetting resin include a urethane resin and a phenolic resin. The sealing material may include a thermoplastic resin. Examples of the thermoplastic resin include a polyamide resin and a fluorine resin.

Examples of the epoxy compound include: bisphenol epoxy compounds, such as a bisphenol A epoxy compound, a bisphenol F epoxy compound, a hydrogenated bisphenol A epoxy compound, a hydrogenated bisphenol F epoxy compound, an alkylene-oxide-modified bisphenol A epoxy compound, and an alkylene-oxide-modified bisphenol F epoxy compound; alkylphenol novolac epoxy compounds, such as a phenol novolac epoxy compound and a cresol novolac epoxy compound; naphthalene epoxy compounds, such as a naphthalene skeleton-modified epoxy compound, a methoxynaphthalene-modified cresol novolac epoxy compound, and a methoxynaphthalene dimethylene epoxy compound; biphenyl epoxy compounds, such as a biphenyl epoxy compound and a tetramethylbiphenyl epoxy compound; cardanol epoxy compounds, such as cardanol glycidyl ether and a cardanol novolac compound; dimer acid-based epoxy compounds; and flame-retardant epoxy compounds formed by halogenation of any of the above epoxy compounds. One of the above epoxy compounds may be used alone, or two or more of them may be used in combination.

Among these, the alkylene-oxide-modified epoxy compounds can be suitably used. Using the alkylene-oxide-modified epoxy compound(s) makes it easy to control the temperature T at the peak position of the loss tangent.

The epoxy compound preferably includes a bifunctional epoxy compound, and the epoxy compound is more preferably a bifunctional epoxy compound. In other words, the epoxy compound preferably includes two epoxy groups per molecule. In this case, the temperature T and the storage modulus E' of the sealing material including the epoxy compound are easily controlled in the above ranges. Examples of the bifunctional epoxy compound include a bisphenol A epoxy compound, a bisphenol F epoxy compound, a modified bisphenol A epoxy compound, a modified bisphenol F epoxy compound, and a biphenyl epoxy compound.

The sealing material may further include a curing agent. The curing speed of the sealing material can be adjusted by adding the curing agent.

Both an aromatic curing agent and a non-aromatic curing agent can be used as the curing agent. Examples of the aromatic curing agent include aromatic amines (e.g., meta-phenylenediamine, diaminodiphenylmethane, diaminodiphenyl sulfone, benzyldimethylamine, and dimethylaminomethyl benzene), aromatic acid anhydrides (e.g., phthalic anhydride, trimellitic anhydride, maleic anhydride, and pyromellitic anhydride), phenolic resins, phenol novolac resins, and amines including a heteroaromatic ring (e.g., an amine including a triazine ring). Examples of the non-aromatic curing agent include aliphatic amines (e.g., ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, and polyether diamine), cycloaliphatic amines (e.g., isophorone diamine, menthane diamine, N-aminoethylpiperazine, a 3,9-bis(3-aminopropyl)2,4,8,10-tetraoxaspiro(5, 5)undecane adduct, bis(4-amino-3-methylcyclohexyl)methane, bis(4-aminocyclohexyl)methane, and a modified product thereof), and aliphatic polyamidoamines including a polyamine and a dimer acid. One of these may be used alone, or two or more of these may be used in combination.

The curing agent is preferably an amine-based curing agent. The curing speed of the sealing material is easily adjusted by adding an amine-based curing agent.

The curing agent preferably includes an amine group in an approximately equivalent amount to an epoxy group included in the epoxy compound, and the amount of an amine group required to sufficiently react with an epoxy group is preferably 0.8 to 1.5 parts per 1 part of the epoxy group. Addition of the curing agent in an amount outside the above range may result in improper curing.

The sealing material may further include a filler. The viscosity and/or the thixotropy of the sealing material can be adjusted by adding an appropriate amount of the filler.

As the filler can be used, for example, a sheet silicate, silica, calcium carbonate, kaolin, talc, mica, bentonite, clay, sericite, glass fiber, carbon fiber, aramid fiber, nylon fiber, acrylic fiber, glass powder, glass microballoon, shirasu balloon, coal powder, acrylic resin powder, phenolic resin powder, metal powder, ceramic powder, zeolite, slate powder, carbon black, titanium oxide, red iron oxide, para red, or Prussian blue. One of these may be used alone, or two or more of these may be used in combination.

The filler is preferably an inorganic filler, and is more preferably a particulate inorganic filler.

An amount of the filler added is preferably 1 part by weight or more and 30 parts by weight or less, more preferably 5 parts by weight or more and 20 parts by weight or less, relative to 100 parts by weight of the epoxy compound. In this case, decrease in handleability due to an excessively low viscosity is suppressed for the sealing member. Addition of the filler in an amount outside the above range may result in improper dispersion of the filler and/or a defect in a cured product of the sealing material, drastically impairing the sealing performance.

The sealing material may further include an additive. Examples of the additive include: deodorants; adhesiveness improvers such as silane coupling agents and titanium coupling agents; antioxidants such as hindered amines, hydroquinones, and hindered phenols; foaming agents; antibacterial agents; fungicides; flame retardants; leveling agents; dispersants; thixotropic agents; and conductive additives. One of these may be used alone, or two or more of these may be used in combination.

An amount of the additive added is preferably 0.5 parts by weight or more and 20 parts by weight or less, more preferably 1 part by weight or more and 15 parts by weight or less, relative to 100 parts by weight of the epoxy compound.

The sealing material can be produced, for example, by adding the curing agent to the epoxy compound and then stirring. When the sealing material further includes the filler, the sealing material including the curing agent and the filler can be produced, for example, by the following method. First, the filler is added to the epoxy compound, followed by stirring to give a mixture. The curing agent is added to the mixture, followed by further stirring. The sealing material including the curing agent and the filler can be produced in this manner.

In the above embodiment, a spiral membrane element is used as an example to describe a membrane separation device including the sealing material, but a membrane separation device including the sealing material is not limited to a spiral membrane element. For example, in a hollow fiber membrane module, the sealing material may be used as a potting agent (adhesive) for binding end portions of a plurality of hollow fiber membranes.

<Membrane separation device>

In another aspect, the present invention provides a membrane separation device including the above sealing material according to the present embodiment. Examples of the membrane separation device include a spiral membrane element and a hollow fiber membrane module.

In the present embodiment, the membrane separation device is the separation membrane element 10 described above in the context of the sealing material. The separation membrane element 10 includes the central tube 21 and the plurality of separation membranes 12 that separate the feed fluid S1 into the permeated fluid S2 and the non-permeated fluid S3. The separation membranes 12 are layered, are each sealed on three sides of the outer peripheral portion of the separation membrane 12 by a cured product of the sealing material 31 to form a sack-like structure, and are wound around the central tube 21. The sealing material 31 includes the above sealing material.

In the separation membrane element 10, since the sealing material 31 includes the above sealing material, a decrease in adhesion of a cured product of the sealing material 31 due to contact with an aqueous solution containing a volatile organic compound is reduced. Because of this, peeling of the cured product of the sealing material 31 off the adhesion interface and occurrence of a leak are avoided.

In the separation membrane element 10, the sealing material 32 may include the above sealing material. That is, the sealing material 32 used to wind the first portion 16a of the spacer 16 around the central tube 21 may include the above sealing material. In the case of this structure, occurrence of a leak is more reliably avoided.

The separation membrane element 10 according to the present embodiment will be described hereinafter in more details with reference to FIGS. 1 and 2.

The central tube 21 includes the openings 21h. The openings 21h are, for example, formed in a wall surface of the central tube 21. In the separation membrane element 10 shown in FIG. 1, the central tube 21 is provided with the plurality of openings 21h at predetermined intervals along a direction in which the central tube 21 extends. The number of rows of the openings 21h provided along the direction in which the central tube 21 extends is, for example, but not particularly limited to, 1 and 2. The central tube 21 may be provided with two rows of the openings 21h in such a manner that the rows face each other when viewed in cross section.

As a material of the central tube 21 can be used a material of a known fluid collecting tube. For example, a resin material, such as an acrylonitrile-butadiene-styrene copolymer resin (ABS resin), a polyphenylene ether resin (PPE resin), or a polysulfone resin (PSF resin), or a metal material, such as a stainless steel (SUS) or titanium, can be used.

FIG. 2 is a schematic cross-sectional view showing the separation membrane 12 included in the separation membrane element 10. In an example shown in FIG. 2, the separation membrane 12 is a pervaporation membrane used in the pervaporation method. The pervaporation method is one of the methods for separating, from an aqueous solution containing a volatile organic compound, the organic compound. The pervaporation method is suitable for separating a volatile organic compound from an aqueous solution containing various substances. Moreover, the pervaporation method tends to be able to reduce energy consumption and carbon dioxide emissions compared to the distillation method.

As shown in FIG. 2, the separation membrane 12 includes, for example, a separation functional layer 1 and a porous support 2 supporting the separation functional layer 1. The separation membrane 12 may further include a protective layer (not shown) protecting the separation functional layer 1. The separation functional layer 1 is, for example, in direct contact with the porous support 2. For example, a principal surface 12a of the separation membrane 12 on the separation functional layer 1 side is exposed to the feed fluid flow passage, while a principal surface 12b thereof on the porous support 2 side is exposed to the permeated fluid flow passage.

The separation membrane 12 may be a membrane (a concentration membrane) preferentially permeable to the organic compound contained in the feed fluid S1 or a membrane (dehydration membrane) preferentially permeable to the water contained in the feed fluid S1.

(Separation functional layer)

When the pervaporation membrane 11 is a concentration membrane, the separation functional layer 1 includes, for example, a hydrophobic material. The term "hydrophobic material" herein refers to, for example, a material having a static water contact angle greater than 90° as measured for a 10 $\mu$L water droplet (at 25°C) dropped on a surface of a test piece formed of the material. The static water contact angle can be measured by using a commercially-available contact angle meter.

Examples of the hydrophobic material include a compound having a siloxane bond (Si-O-Si bond), an olefin-based polymer, an oil, and a fluorine-based compound. The separation functional layer 1 preferably includes a compound having a siloxane bond as the hydrophobic material. The compound having a siloxane bond is typically a silicone resin. The silicone resin may be solid or liquid at 25°C. Specific examples of the silicone resin include polydimethylsiloxane (PDMS). Specific examples of the olefin-based polymer include polyethylene and polypropylene. Specific examples of the oil include a hydrocarbon-based oil such as liquid paraffin. Examples of the fluorine-based compound include polytetrafluoroethylene (PTFE), polyvinylidene fluoride (PVDF), and a tetrafluoroethylene-perfluoroalkyl vinyl ether copolymer (PFA). One hydrophobic material may be used alone, or two or more hydrophobic materials may be used in combination.

The separation functional layer 1 may include a silicone resin. The separation membrane 12 including the separation functional layer 1 including the silicone resin is suitable for concentrating the organic compound contained in the feed fluid S1.

The separation functional layer 1 may include the hydrophobic material as its main component, or may be substantially composed only of the hydrophobic material. The term "main component" means a component with the highest weight proportion in the separation functional layer 1.

The separation functional layer 1 may include a matrix including the hydrophobic material and a filler dispersed in the matrix. The filler is embedded in the matrix. In the matrix, all particles of the filler may be spaced from each other, or the particles of the filler may partly aggregate.

The filler includes, for example, an inorganic material such as zeolite, silica, or bentonite. The zeolite included in the filler is preferably a high-silica zeolite having a high ratio of silica to alumina. The high-silica zeolite is suitable for separating the aqueous solution S1 because of its high resistance to hydrolyzation. As the high-silica zeolite can be used HSZ (registered trademark) manufactured by Tosoh Corporation, HiSiv (registered trademark) manufactured by UNION SHOWA K.K., USKY manufactured by UNION SHOWA K.K., or Zeoal (registered trademark) manufactured by Nakamura Choukou Co., Ltd.

The filler may include a metal-organic framework (MOF). The metal-organic framework is also called a porous coordination polymer (PCP). The metal-organic framework is preferably hydrophobic. The metal-organic framework includes, for example, a metal ion and an organic ligand. Examples of the metal ion include a Zn ion. The organic ligand includes, for example, an aromatic ring. Examples of the aromatic ring included in the organic ligand include an imidazole ring. Examples of the organic ligand include 2-methylimidazole. Specific examples of the metal-organic framework include ZIF-8.

The filler has, for example, a particle shape. The term "particle shape" herein includes a spherical shape, an elliptical shape, a flake shape, and a fiber shape. An average particle diameter of the filler is, for example, but not particularly limited to, 50 $\mu$m or less, preferably 20 $\mu$m or less, more preferably 10 $\mu$m or less. The lower limit of the average particle diameter of the filler is, for example, 0.01 $\mu$m. The average particle diameter of the filler can be determined, for example, by the following method. First, a cross-section of the separation functional layer 1 is observed using a transmission electron microscope. The area of one of the particles of the filler in the resulting electron microscope image is calculated by image processing. The diameter of a circle having the same area as the calculated area is considered the diameter of the particle of the filler. The particle diameter is calculated for any number (at least 50) of the particles of the filler, and the average of the calculated values is considered the average particle diameter of the filler.

When the separation membrane 12 is a dehydration membrane, the separation functional layer 1 may include at least one selected from the group consisting of a polyimide and a zeolite. Zeolites are highly hydrophilic. Polyimides are materials capable of suppressing swelling by water, compared to zeolites. Specific examples of the zeolite include crystalline silicate, such as silicalite-1 and silicalite-2, and crystalline titanosilicate, such as TS-1. The separation membrane 12 including the separation functional layer 1 including at least one selected from the group consisting of the polyimide and the zeolite is suitable for removing moisture contained in the feed fluid S1, namely, dehydration.

The separation functional layer 1 may include the polyimide as its main component, or may be substantially composed only of the polyimide. The separation functional layer 1 may include the zeolite as its main component, or may be substantially composed only of the zeolite.

The separation functional layer 1 may include a matrix including at least one selected from the group consisting of the polyimide and the zeolite and a filler dispersed in the matrix. The filler is embedded in the matrix. In the matrix, all particles of the filler may be spaced from each other, or the particles of the filler may partly aggregate. As the filler can be used those mentioned as the filler that can be included in the separation functional layer 1 in which the separation membrane 12 is a concentration membrane.

A content of the filler in the separation functional layer 1 is, for example, 10 wt% or more, preferably 30 wt% or more, more preferably 40 wt% or more. The upper limit of the content of the filler in the separation functional layer 1 is, for example, but not particularly limited to, 70 wt%. A content of the matrix in the separation functional layer 1 is, for example, but not particularly limited to, 30 wt% to 90 wt%.

A thickness of the separation functional layer 1 is, for example, 200 $\mu$m or less, preferably 100 $\mu$m or less, more preferably 80 $\mu$m or less. The thickness of the separation functional layer 1 may be, 1.0 $\mu$m or more, 10 $\mu$m or more, or 30 $\mu$m or more.

The separation functional layer 1 may have a microporous structure with an average pore diameter of less than 0.01 $\mu$m. The separation functional layer 1 may be a dense layer having no pore on its surface.

(Porous support)

Examples of the porous support member 2 include: nonwoven fabric; porous polytetrafluoroethylene; an aromatic polyamide fiber; a porous metal; a sintered metal; a porous ceramic; a porous polyester; porous nylon; activated carbon fiber; a latex; silicone; a silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, a polyimide, and polyphenylene oxide; a metallic foam having an open cell or a closed cell; a polymer foam having an open cell or a closed cell; silica; porous glass; and a mesh screen. The porous support member 2 may be a combination of two or more of these materials.

The porous support 2 has, for example, an average pore diameter of 0.01 to 0.4 $\mu$m. A thickness of the porous support 2 is, for example, but not particularly limited to, 10 $\mu$m or more, preferably 50 $\mu$m or more, more preferably 100 $\mu$m or more. The thickness of the porous support 2 is, for example, 300 $\mu$m or less, preferably 200 $\mu$m or less.

(Protective layer)

The protective layer coats, for example, a surface of the separation functional layer 1. A material of the protective layer is, for example, but not particularly limited to, a silicone resin. The material of the protective layer may be the same as or different from the material of the matrix of the separation functional layer 1. A thickness of the protective layer is, for example, but not particularly limited to, 0.5 $\mu$m or more, preferably 1 $\mu$m or more, more preferably 5 $\mu$m or more, even more preferably 10 $\mu$m or more. The thickness of the protective layer is, for example, 100 $\mu$m or less, preferably 50 $\mu$m or less, more preferably 30 $\mu$m or less.

Although not illustrated in the figure, a shell surrounding the layered body 22 may be further included in the separation membrane element 10. The shell may be made of a fiber-reinforced plastic (FRP). Although not illustrated in the figure, an end face member may be disposed on each of the two sides of the layered body 22 in order to protect the end faces of the layered body 22 and prevent the layered body 22 from extending telescopically.

The feed fluid S1 to be processed by the separation membrane element 10 is the aqueous solution containing the volatile organic compound (hereinafter simply referred to as "aqueous solution"). The organic compound is not limited to a particular one as long as the organic compound has volatility. An organic compound having volatility herein refers to, for example, an organic compound having a boiling point of 20°C to 260°C under an atmospheric pressure (101.325 kPa). Note that the organic compound is, for example, one that, at high concentration in the solution, causes formation of an aqueous phase containing water as its main component and an organic phase having a higher content of the organic compound than that in the aqueous phase.

The number of carbon atoms in the organic compound is, for example, but not particularly limited to, 10 or less, and may be 8 or less, 6 or less, or even 4 or less. The lower limit of the number of carbon atoms in the organic compound may be 1 or 2. The organic compound has, for example, an oxygen-containing functional group, such as a hydroxyl group, a carbonyl group, and an ether group. In the organic compound, the number of oxygen-containing functional groups is typically one.

Examples of the organic compound include an alcohol and a ketone. When the organic compound is an alcohol, the organic compound is compatible with water and the environment inside the system is likely to be homogeneous. The alcohol may be an alkyl alcohol composed only of an alkyl group and a hydroxyl group, or may be an aryl alcohol including an aryl group and a hydroxyl group. The alkyl alcohol may be linear, branched, or cyclic. In the organic compound, the alkyl alcohol is, for example, methanol, ethanol, n-propanol, isopropanol, n-butanol (BuOH), 2-butanol, isobutanol, t-butanol, or n-pentanol, and is preferably n-butanol. n-Butanol is a compound that causes formation of two phases (a water phase and an organic phase) from the aqueous solution when a content of n-butanol in the aqueous solution is approximately 8 wt% or more. Hence, when the organic compound is n-butanol, it is possible to cause formation of a water phase and an organic phase in the permeated fluid after liquefaction, for example, by adjusting the content of the organic compound in the permeated fluid to approximately 8 wt% or more. In this case, the permeated fluid can be easily purified by separating the water phase and the organic phase. Examples of the aryl alcohol include phenol.

The ketone may be a dialkyl ketone composed only of an alkyl group and a carbonyl group. Examples of the dialkyl ketone in the organic compound include methyl ethyl ketone (MEK) and acetone.

The organic compound is not limited to the above ones. The organic compound may be an ester compound, such as ethyl acetate, isobutyl acetate, or butyl acetate, or an aromatic compound, such as benzene, toluene, or xylene.

The aqueous solution may contain one organic compound or two or more organic compounds. A content of the organic compound in the aqueous solution is, for example, 50 wt% or less, and may be 30 wt% or less, 10 wt% or less, 5 wt% or less, 2 wt% or less, or even 1 wt% or less. The lower limit of the content of the organic compound is, for example, but not particularly limited to, 0.01 wt%.

The organic compound may be a fermented product generated by microbial fermentation of a carbon source. That is, the aqueous solution may be a fermented solution containing the organic compound as the fermented product.

In addition to water and the organic compound, the fermented solution may further contain an additional component, such as a microorganism involved in generation of the fermented product, a carbon source, a nitrogen source, and an inorganic ion. The microorganism involved in generation of the fermented product is typically a bacterium. Examples of the carbon source include polysaccharides, such as starch, and monosaccharides, such as glucose.

A membrane separation method in which the separation membrane element 10 according to the present embodiment is used may employ an operation type (depressurization type) in which a pressure difference is created by depressurizing from the permeation side or an operation type (pressurization type) in which a feed pressure is controlled from the non-permeation side for pressurization.

EXAMPLES

Hereinafter, the present invention will be described in more detail by way of examples and comparative examples. The present invention is not limited to these examples.

[Production of sealing material]

(Examples 1 to 13 and Comparative Examples 1 to 6)

A filler was added as necessary to an epoxy compound, followed by stirring at 2000 rpm for three minutes using a mixer (ARE-310 manufactured by THINKY CORPORATION). This was followed by further stirring at 2200 rpm for one minute to give a mixture. A curing agent was added to the mixture, followed by stirring using the mixer at 2000 rpm for three minutes and then at 2200 rpm for one minute. Sealing materials of Examples 1 to 13 and Comparative Examples 1 to 6 were obtained in this manner. Table 1 shows compositions of the sealing materials of Examples 1 to 13 and Comparative Examples 1 to 6.

(Examples 14 to 26)

A filler and, as necessary, a silane coupling agent were added to an epoxy compound, followed by stirring at 2000 rpm for three minutes using a mixer (ARE-310 manufactured by THINKY CORPORATION). This was followed by further stirring at 2200 rpm for one minute to give a mixture. A curing agent was added to the mixture, followed by stirring using the mixer at 2000 rpm for three minutes and then at 2200 rpm for one minute. The sealing materials of Examples 14 to 26 were obtained in this manner. Table 2 shows compositions of the sealing materials of Examples 14 to 26.
Details of the raw materials, etc. described in Tables 1 and 2 are as follows.

(Epoxy compound)

- jER 834 (manufactured by Mitsubishi Chemical Corporation): A bisphenol A epoxy compound (epoxy equivalent: 230 to 270)
- jER 828 (manufactured by Mitsubishi Chemical Corporation): A bisphenol A epoxy compound (epoxy equivalent: 184 to 194)
- EP-4000 (manufactured by ADEKA CORPORATION): An alkylene-oxide-modified bisphenol A epoxy compound (epoxy equivalent: 320)
- jER 807 (manufactured by Mitsubishi Chemical Corporation): A bisphenol F epoxy compound (epoxy equivalent: 160 to 175)
- jER 806 (manufactured by Mitsubishi Chemical Corporation): A bisphenol F epoxy compound (epoxy equivalent: 160 to 170)

(Curing agent)

- Ancamide 350A (manufactured by Evonik Industries AG) (Filler)
- GARAMITE 1958 (manufactured by BYK Japan K.K.)
- AEROSIL 50 (manufactured by Evonik Industries AG)
- AEROSIL 200 (manufactured by Evonik Industries AG)

(Silane coupling agent)

- KBM-403 (manufactured by Shin-Etsu Chemical Co., Ltd.): 3-glycidoxypropyltrimethoxysilane

[Table 1]

| | Proportion of epoxy compounds | | | Curing agent | Proportion of curing agent (to 100 parts by weight of epoxy compound) | Filler | Proportion of filler (to 100 parts by weight of epoxy compound) |
|---|---|---|---|---|---|---|---|
| | jER 834 | jER 828 | EP-4000 | | | | |
| Ex. 1 | - | - | 100 | Ancamide 350A | 32.8 | GARAMITE 1958 | 8 |
| Ex. 2 | 25 | 75 | - | Ancamide 350A | 51.7 | - | - |
| Ex. 3 | - | 50 | 50 | Ancamide 350A | 43.83 | GARAMITE 1958 | 8 |
| Ex. 4 | - | 30 | 70 | Ancamide 350A | 39.36 | GARAMITE 1958 | 8 |

(continued)

| | Proportion of epoxy compounds | | | Curing agent | Proportion of curing agent (to 100 parts by weight of epoxy compound) | Filler | Proportion of filler (to 100 parts by weight of epoxy compound) |
|---|---|---|---|---|---|---|---|
| | jER 834 | jER 828 | EP-4000 | | | | |
| Ex. 5 | - | 25 | 75 | Ancamide 350A | 38.24 | GARAMITE 1958 | 8 |
| Ex. 6 | - | 20 | 80 | Ancamide 350A | 37.13 | GARAMITE 1958 | 8 |
| Ex. 7 | - | 15 | 85 | Ancamide 350A | 36.01 | GARAMITE 1958 | 8 |
| Ex. 8 | - | 10 | 90 | Ancamide 350A | 34.89 | GARAMITE 1958 | 8 |
| Ex. 9 | - | 25 | 75 | Triethylenetetramine | 8.93 | GARAMITE 1958 | 8 |
| Ex. 10 | - | 20 | 80 | Triethylenetetramine | 8.67 | GARAMITE 1958 | 8 |
| Ex. 11 | - | 20 | 80 | Triethylenetetramine | 8.67 | - | - |
| Ex. 12 | - | 100 | - | Ancamide 350A | 55 | - | - |
| Ex. 13 | - | 25 | 75 | Triethylenetetramine | 8.93 | - | - |
| Comp. Ex. 1 | - | 100 | - | Ancamide 350A | 55 | GARAMITE 1958 | 8 |
| Comp. Ex. 2 | - | 100 | - | Triethylenetetramine | 12.84 | - | - |
| Comp. Ex. 3 | - | 25 | 75 | Ancamide 350A | 38.24 | - | - |
| Comp. Ex. 4 | - | - | 100 | Ancamide 350A | 32.8 | - | - |
| Comp. Ex. 5 | - | 100 | - | 4,4-Methylene bis (cyclohexylamine) | 22 | - | - |
| | | | | Diethylenetriamine | 12 | | |
| Comp. Ex. 6 | - | 100 | - | 4,4-Methylene bis (cyclohexylamine) | 31 | - | - |

[Table 2]

| | Proportion of epoxy compounds | | | | Curing agent | Proportion of curing agent (to 100 parts by weight of epoxy compound) | Filler | Proportion of filler (to 100 parts by weight of epoxy compound) | Silane coupling agent | Proportion of silane coupling agent (to 100 parts by weight of epoxy compound) |
|---|---|---|---|---|---|---|---|---|---|---|
| | jER 828 | EP-4000 | jER 807 | jER 806 | | | | | | |
| Ex. 14 | 25 | 75 | - | - | Ancamide 350A | 38.24 | AEROSIL 50 | 11 | - | - |
| Ex. 15 | 25 | 75 | - | - | Ancamide 350A | 38.24 | AEROSIL 200 | 7 | - | - |

(continued)

| | Proportion of epoxy compounds | | | | Curing agent | Proportion of curing agent (to 100 parts by weight of epoxy compound) | Filler | Proportion of filler (to 100 parts by weight of epoxy compound) | Silane coupling agent | Proportion of silane coupling agent (to 100 parts by weight of epoxy compound) |
|---|---|---|---|---|---|---|---|---|---|---|
| | jER 828 | EP-4000 | jER 807 | jER 806 | | | | | | |
| Ex. 16 | - | 75 | 25 | - | Ancamide 350A | 39.86 | GARAMITE 1958 | 8 | - | - |
| Ex. 17 | - | 75 | 25 | - | Ancamide 350A | 39.86 | AEROSIL 200 | 7 | - | - |
| Ex. 18 | - | 50 | 50 | - | Ancamide 350A | 47.06 | AEROSIL 200 | 7 | - | - |
| Ex. 19 | - | 25 | 75 | - | Ancamide 350A | 54.27 | AEROSIL 200 | 8 | - | - |
| Ex. 20 | - | - | 100 | - | Ancamide 350A | 61.47 | AEROSIL 200 | 8 | - | - |
| Ex. 21 | - | 75 | - | 25 | Ancamide 350A | 40.33 | AEROSIL 200 | 7 | - | - |
| Ex. 22 | - | 50 | - | 50 | Ancamide 350A | 47.99 | AEROSIL 200 | 7 | - | - |
| Ex. 23 | - | 25 | - | 75 | Ancamide 350A | 55.66 | AEROSIL 200 | 8 | - | - |
| Ex. 24 | - | - | - | 100 | Ancamide 350A | 63.33 | AEROSIL 200 | 8 | - | - |
| Ex. 25 | 25 | 75 | - | - | Ancamide 350A | 38.24 | GARAMITE 1958 | 8 | KB-M-403 | 3 |
| Ex. 26 | 25 | 75 | - | - | Ancamide 350A | 38.24 | AEROSIL 200 | 7 | KBM-403 | 3 |

[Production of sample piece]

Each sealing material was cured to give a sample piece by the above-described method. The sample piece had a strip shape having a width of 5 mm and a length of 50 mm, and had a thickness of 100 to 150 $\mu$m.

(Dynamic viscoelasticity measurement test)

A peak position of loss tangent (tan$\delta$) of the temperature T and the storage modulus E' at 60°C were determined for each sample piece by the above-described method. RSA G2 (measurement mode: liquid tensile) manufactured by TA Instruments was used as the DMA device. Tables 3 and 4 show the results. Note that in the case of the sealing material including the filler, the temperature T and the storage modulus E' shown in Tables 3 and 4 are values determined by performing the dynamic viscoelasticity measurement test for the sample piece including the filler. For Comparative Example 1, the temperature T and the storage modulus E' were unable to be determined because the sample piece ruptured during the dynamic viscoelasticity measurement test. For Comparative Examples 2 and 6, the temperature T was unable to be determined because the peak position of tan$\delta$ exceeded 60°C, which is the upper limit of the measurement temperature range.

[Table 3]

| | Temperature T at peak position of tanδ [°C] | Storage modulus E' at 60°C [Pa] | Adhesion test |
|---|---|---|---|
| Ex. 1 | 6.91 | $2.12 \times 10^7$ | A |
| Ex. 2 | 56.48 | $3.54 \times 10^7$ | A |
| Ex. 3 | 30.03 | $4.54 \times 10^7$ | A |
| Ex. 4 | 19.58 | $3.28 \times 10^7$ | A |
| Ex. 5 | 17.21 | $3.05 \times 10^7$ | A |
| Ex. 6 | 15.59 | $2.92 \times 10^7$ | A |
| Ex. 7 | 13.16 | $2.68 \times 10^7$ | A |
| Ex. 8 | 11.76 | $2.56 \times 10^7$ | A |
| Ex. 9 | 24.91 | $5.95 \times 10^7$ | A |
| Ex. 10 | 22.74 | $5.85 \times 10^7$ | A |
| Ex. 11 | 21.8 | $1.17 \times 10^7$ | A |
| Ex. 12 | 56.14 | $5.35 \times 10^7$ | B |
| Ex. 13 | 24.41 | $1.29 \times 10^7$ | B |
| Comp. Ex. 1 | Not measurable | Not measurable | C |
| Comp. Ex. 2 | Out of measurement range (T > 60) | $1.48 \times 10^9$ | C |
| Comp. Ex. 3 | 17.83 | $8.84 \times 10^6$ | C |
| Comp. Ex. 4 | 4.92 | $8.09 \times 10^6$ | C |
| Comp. Ex. 5 | 39.67 | $7.49 \times 10^6$ | C |
| Comp. Ex. 6 | Out of measurement range (T > 60) | $1.49 \times 10^9$ | C |

[Table 4]

| | Temperature T at peak position of tanδ [°C] | Storage modulus E' at 60°C [Pa] | Adhesion test |
|---|---|---|---|
| Ex. 14 | 17.34 | $2.00 \times 10^7$ | A |
| Ex. 15 | 17.02 | $1.86 \times 10^7$ | A |
| Ex. 16 | 16.19 | $3.09 \times 10^7$ | A |
| Ex. 17 | 16.42 | $1.27 \times 10^7$ | A |
| Ex. 18 | 26.63 | $1.94 \times 10^7$ | A |
| Ex. 19 | 37.66 | $2.45 \times 10^7$ | A |
| Ex. 20 | 54.51 | $3.58 \times 10^7$ | A |
| Ex. 21 | 16.56 | $1.72 \times 10^7$ | A |
| Ex. 22 | 26.11 | $2.01 \times 10^7$ | A |
| Ex. 23 | 36.65 | $2.33 \times 10^7$ | A |
| Ex. 24 | 53.34 | $3.01 \times 10^7$ | A |
| Ex. 25 | 16.17 | $2.32 \times 10^7$ | A |
| Ex. 26 | 17.81 | $1.91 \times 10^7$ | A |

(Evaluation of adhesion)

Cured products of the sealing materials of Examples 1 to 13, Comparative Examples 1 to 6, and Examples 14 to 26 were evaluated for the adhesion to a substrate by the method described below.

First, each sealing material was applied to a substrate to form a sheet shape, and was cured by heating at a temperature of 80°C for two hours. A sample body in which a coating film formed of a cured product of the sealing material was placed on a substrate was produced thereby. A stainless steel (SUS) plate having a width of 30 cm, a length of 50 cm, and a thickness of 0.5 mm was used as the substrate. The coating film had a thickness of 100 to 300 μm.

Next, a container was charged with a 20 weight% aqueous ethanol solution $S_E$. The sample body was immersed therein for three days while the aqueous solution $S_E$ was maintained at 60°C. After the three-day immersion, the adhesion of the coating film to the SUS plate was visually evaluated. Tables 3 and 4 show the results.

Details of A, B, and C shown in Tables 3 and 4 are as follows.

- A: Neither peeling nor lifting of the coating film was observed, and the adhesion was fine.
- B: Partial lifting of the coating film was observed, but the adhesion was almost fine.
- C: Peeling of the coating film was observed.

The cured products of the sealing materials of Examples 1 to 13 and Examples 14 to 26 had excellent adhesion, compared to the cured products of the sealing materials of Comparative Examples 1 to 6. It is understood from this result that when the storage modulus E' was in the range of $10^7$ Pa or more and $10^9$ Pa or less, a decrease in adhesion due to contact with the aqueous solution containing the volatile organic compound was reduced. The cured products of the sealing materials of Examples 1 to 13 and Examples 14 to 26 had a temperature T of 0°C or higher and 60°C or lower. It is inferred that since the temperature T was in the range of 0°C or higher and 60°C or lower, swelling-induced dimensional change was reduced and the adhesion retention force at the adhesion interface was maintained, and thus a decrease in adhesion was further reduced.

The sealing material of Example 9 differs from the sealing material of Example 13 in that the sealing material of Example 9 includes a filler. The sealing material of Example 10 differs from the sealing material of Example 11 in that the sealing material of Example 10 includes a filler. The cured product of the sealing material of Example 9 has a higher storage modulus E' than that of the cured product of the sealing material of Example 13. The cured product of the sealing material of Example 10 has a higher storage modulus E' than that of the cured product of the sealing material of Example 11. From these results, it is thought that the addition of the appropriate amount of the filler resulted in the increase of the storage modulus E' of the cured product of the sealing material and the enhancement of the adhesion retention force at the adhesion interface of the cured product of the sealing material. Moreover, the addition of the appropriate amount of the filler enhanced the thixotropy of the sealing material in the uncured state and the workability.

For example, the sealing material of Example 15 differs from the sealing material of Example 5 in that a silica filler was used as the filler. By comparison of their results, it is understood that a decrease in adhesion due to contact with an aqueous solution containing a volatile organic compound was reduced even when the silica filler was used as the filler. A silica filler can be used as appropriate taking into account the dispersibility in the epoxy compound, the thixotropy, etc.

For example, the sealing materials of Examples 16 to 24 differ from the sealing materials of Examples 3 to 8 in that a bisphenol F-type epoxy resin was used as the epoxy compound. By comparison of their results, it is understood that the storage modulus E' and the temperature T can be controlled even when a bisphenol F-type epoxy resin is used as the epoxy compound.

For example, the sealing material of Example 25 differs from the sealing material of Example 5 in that the sealing material of Example 25 includes a silane coupling agent as the additive. By comparison of their results, it is understood that the storage modulus E' and the temperature T can fall within the favorable ranges even when a silane coupling agent is included as the additive. A silane coupling agent, which further increases the adhesion, can be used as appropriate.

In Examples above, a 20 weight% aqueous ethanol solution was used as the aqueous solution containing the volatile organic compound; it is inferred that even if an aqueous solution containing a volatile organic compound other than a 20 weight% aqueous ethanol solution is used, a similar effect can be achieved as long as the behavior of the storage modulus E' in the solution is in the range specified in the present invention.

INDUSTRIAL APPLICABILITY

The sealing material according to the present embodiment is suitable for a membrane separation device configured to be used to separate an aqueous solution containing a volatile organic compound into a permeated fluid and a non-permeated fluid, and is particularly suitable for a spiral membrane element.

**Claims**

1. A sealing material for membrane separation devices, the sealing material being configured to be included in a membrane separation device, wherein
   a storage modulus E' at 60°C is $10^7$ Pa or more and $10^9$ Pa or less, the storage modulus E' being measured by a dynamic viscoelasticity measurement test for a sheet-shaped sample piece obtained by curing the sealing material while the sheet-shaped sample piece is immersed in a 20 weight% aqueous ethanol solution.

2. The sealing material according to claim 1, wherein
a temperature T at a peak position of loss tangent is 0°C or higher and 60°C or lower, the loss tangent being measured by a dynamic viscoelasticity measurement test for a sheet-shaped sample piece obtained by curing the sealing material while the sheet-shaped sample piece is immersed in a 20 weight% aqueous ethanol solution.

3. The sealing material according to claim 2, wherein the temperature T is 4°C or higher and 40°C or lower.

4. The sealing material according to claim 1, wherein the storage modulus E' is $10^7$ Pa or more and $10^8$ Pa or less.

5. The sealing material according to claim 1, including an epoxy compound.

6. The sealing material according to claim 5, wherein the epoxy compound includes a bifunctional epoxy compound.

7. A membrane separation device comprising:

a central tube; and
a plurality of separation membranes that separate an aqueous solution containing a volatile organic compound into a permeated fluid and a non-permeated fluid, wherein
the separation membranes are layered, are each sealed on an outer peripheral portion of the separation membrane by a cured product of a sealing material to form a sack-like structure, and are wound around the central tube, and
the sealing material includes the sealing material according to any one of claims 1 to 6.

**FIG. 1**

**FIG. 2**

FIG. 3A

FIG. 3B

FIG. 4

## INTERNATIONAL SEARCH REPORT

| International application No. |
| --- |
| **PCT/JP2024/008892** |

**A. CLASSIFICATION OF SUBJECT MATTER**

*C09K 3/10*(2006.01)i; *B01D 63/00*(2006.01)i; *B01D 63/10*(2006.01)i
FI:   C09K3/10 L; B01D63/00 500; B01D63/10

According to International Patent Classification (IPC) or to both national classification and IPC

**B. FIELDS SEARCHED**

Minimum documentation searched (classification system followed by classification symbols)

C09K3/10-3/12; B01D53/22; B01D61/00-71/82; C02F1/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2020/149041 A1 (NITTO DENKO CORPORATION) 23 July 2020 (2020-07-23) claims 1-7 | 1-7 |
| A | WO 2018/186109 A1 (SUMITOMO CHEMICAL COMPANY, LIMITED) 11 October 2018 (2018-10-11) claims 1-14 | 1-7 |
| A | JP 2017-530002 A (3M INNOVATIVE PROPERTIES COMPANY) 12 October 2017 (2017-10-12) claims 1-20 | 1-7 |
| A | WO 2015/186705 A1 (MITSUBISHI RAYON CO., LTD.) 10 December 2015 (2015-12-10) claims 1-10 | 1-7 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 March 2024** | **09 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
**Information on patent family members**

International application No.

**PCT/JP2024/008892**

| Patent document cited in search report | | | Publication date (day/month/year) | Patent family member(s) | | | Publication date (day/month/year) |
|---|---|---|---|---|---|---|---|
| WO | 2020/149041 | A1 | 23 July 2020 | JP | 2020-116484 | A | |
| WO | 2018/186109 | A1 | 11 October 2018 | US | 2020/0047129 | A1 | |
| | | | | claims 1-14 | | | |
| | | | | JP | 2018-176040 | A | |
| | | | | EP | 3608011 | A1 | |
| | | | | CN | 110545896 | A | |
| | | | | TW | 201841676 | A | |
| JP | 2017-530002 | A | 12 October 2017 | WO | 2016/049281 | A1 | |
| | | | | claims 1-20 | | | |
| | | | | US | 2017/0291143 | A1 | |
| | | | | EP | 3197591 | A1 | |
| | | | | KR | 10-2017-0063759 | A | |
| | | | | CN | 107073398 | A | |
| | | | | BR | 112017006151 | A | |
| WO | 2015/186705 | A1 | 10 December 2015 | US | 2017/0189860 | A1 | |
| | | | | claims 1-10 | | | |
| | | | | EP | 3153228 | A1 | |
| | | | | CA | 2950883 | A1 | |
| | | | | CN | 106457154 | A | |
| | | | | TW | 201607605 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009018239 A

- JP 2018118249 A